# DEMANDE DE BREVET EUROPEEN

(11) **EP 3 217 210 A1**
(43) Date de publication de la demande: **13.09.2017**
(21) Numéro de dépôt: 17159725.5
(22) Date de dépôt: 07.03.2017
(51) Int. Cl.: G02B 27/01, H05B 33/00

(54) **PROJECTEUR D'IMAGE PAR ECRAN AVEC SOURCE LUMINEUSE A BATONNETS ELECTROLUMINESCENTS**

(30) Priorité: 11.03.2016 FR 1652081
(71) Demandeur: Valeo Vision, 93012 Bobigny Cedex (FR)
(72) Inventeur: BRIAND, Gilles, 06250 MOUGINS (FR); LE-CALVEZ, Gilles, 92500 RUEIL-MALMAISON (FR)

(57) **Abrégé**

La présente invention se rapporte à un système d'affichage comprenant :
-un écran (141),
-un projecteur d'image (152) comprenant une source lumineuse avec des bâtonnets électroluminescents configurés de manière à émettre un motif lumineux,
-dans lequel le projecteur et l'écran coopèrent de manière à former une image virtuelle (I) du motif lumineux par l'écran.

## Description

La présente invention concerne un système de projection d'image sur un écran au moins partiellement transparent, notamment un écran de véhicule automobile et/ou destiné à être embarqué dans un véhicule.

Il est connu des systèmes comprenant un écran à l'intérieur duquel une information est affichée. Par exemple, dans les véhicules automobiles, il est connu des lames transparentes, s'étendant depuis le tableau de bord et à l'intérieur desquelles sont affichées des images. Souvent ces systèmes n'affichent qu'une image basique ou bien mettent en oeuvre des dispositifs encombrants.

Le problème technique que vise à résoudre l'invention est donc d'améliorer les performances d'un système permettant d'afficher une image par rapport à un écran, en améliorant la capacité de ce système à afficher une image avec plus de détails tout en ayant un encombrement limité, voire réduit.

A cet effet, un premier objet de l'invention est un système d'affichage comprenant :
- un écran au moins partiellement transparent et au moins partiellement réfléchissant,
- un projecteur d'image comprenant une source lumineuse comprenant des bâtonnets électroluminescents de dimensions submillimétriques, l'ensemble des bâtonnets étant configurés de manière à émettre un motif lumineux.

Dans ce système d'affichage selon l'invention, le projecteur d'image et l'écran coopèrent de manière à former une image virtuelle du motif lumineux par l'écran.

En mettant ainsi à profit une source lumineuse à bâtonnets électroluminescents de dimensions submillimétriques, il est possible d'obtenir un motif lumineux comprenant différents détails et d'une résolution meilleure, tout en ayant une source lumineuse de taille réduite comparé aux autres sources lumineuses, telles que des LEDs ou des écrans LCD. Le projecteur peut ainsi être de taille plus réduite et le système d'affichage moins encombrant.

Cette source lumineuse est appelée ci-après source lumineuse à bâtonnets.

Le projecteur d'image permet de loger la source lumineuse à distance de l'écran. Cela offre ainsi plus de degrés de liberté pour adapter le système à l'environnement dans lequel il est destiné à être intégré, par exemple un habitacle de véhicule.

De plus, l'agencement avec l'écran pour former l'image virtuelle permet à un observateur regardant au travers de cet écran d'observer cette image virtuelle. Cette dernière ne sera pas visualisée directement au niveau de l'écran mais en avant de celui-ci. Cela offre également plus de liberté d'agencement, puisque l'écran n'a pas à être positionné à l'endroit où l'image est destinée à être observée, à la différence par exemple d'un écran classique sur lequel on projette une image source.

L'image source est ici une image ou tâche lumineuse réellement envoyée à un endroit donné.

Selon une réalisation de l'invention, le projecteur d'image comprend des éléments optiques agencés pour réaliser une projection de l'image source de la source lumineuse. La projection au moyen d'éléments optiques est un moyen simple de réaliser un motif observable. Celui-ci correspondra en effet au motif lumineux de la source lumineuse. De plus, cela peut, selon l'agencement du système, permettre de réaliser une image source plus grande que la source lumineuse à bâtonnets, sans altérer la compacité du système.

Le système d'affichage selon l'invention peut optionnellement comprendre une ou plusieurs des caractéristiques suivantes :
- le projecteur d'image est agencé de manière à envoyer une image source du motif lumineux sur l'écran ; c'est une forme simple de réalisation ;
- l'image virtuelle est formée en avant de l'écran ; cela est utile selon certaines réalisations, notamment dans les cas où l'écran est un verre de lunette ;
- l'écran a un coefficient de transmission lumineuse d'au moins 20% ;
- le projecteur d'image comprend des éléments optiques agencés pour réaliser une projection de l'image source de ladite source lumineuse ; c'est une réalisation simple et compacte permettant la formation d'une image à partir d'un motif ;
- les éléments optiques et la source lumineuse sont agencés de manière à ce que la direction d'émission de la lumière par la source lumineuse soit transversale, notamment environ perpendiculaire, à la normale à une tranche de l'écran par laquelle entrent les rayons lumineux sortant du projecteur d'image ; le projecteur d'image peut ainsi s'étendre en longueur transversalement par rapport à l'écran ;
- l'écran comprend des miroirs de Bragg, le projecteur d'image et l'écran étant agencés de manière à ce que l'image virtuelle se forme par réflexion de rayons provenant de l'image source sur ces miroirs de Bragg ;
   cela permet une meilleure réflectivité et donc de limiter la puissance de la source d'énergie alimentant le projecteur d'image ;
- le projecteur d'image est agencé de manière à envoyer l'image source selon une direction formant avec la normale à l'écran un angle supérieur à 45° ; cela améliore la compacité du système ;
- l'écran comprend deux faces étendues séparées par une tranche, le projecteur d'image étant agencé de manière à envoyer les rayons lumineux formant l'image source vers cette tranche, l'écran comprenant des éléments de découplage et étant agencé de manière à ce que ces rayons lumineux se propagent à l'intérieur de l'épaisseur de l'écran jusqu'à des éléments de découplage qui renvoient les rayons lumineux hors de l'écran au travers de l'une de ses faces étendues ; l'image est ainsi propagée par réflexion interne et le projecteur d'image peut être agencé à proximité de l'écran ;
- les bâtonnets sont répartis dans différentes zones lumineuses agencées de manière à former le motif lumineux ; cela permet de conférer une certaine résolution à l'image source ;
- les zones lumineuses sont activables sélectivement ; cela permet de modifier les images affichées avec la même source lumineuse, voire de diffuser une image animée ;
- les zones lumineuses sont réparties en groupements lumineux, chacun de ces groupements comprenant au moins deux zones lumineuses, et pour chacun des groupements lumineux, chaque zone lumineuse étant apte à émettre des rayons lumineux d'une couleur différente de celle des rayons lumineux que les autres zones lumineuses de ce groupement lumineux sont aptes à émettre ; ainsi on peut avoir des images très précises avec une bonne résolution ;
- l'agencement des zones lumineuses est identique dans chacun des groupements lumineux ; cela rend plus facile le pilotage, en particulier sélectif, des zones lumineuses ;
- les groupements lumineux sont agencés dans la source lumineuse en rangées et en colonnes, les rangées et les colonnes comprennent un nombre de groupements lumineux suffisant pour qu'au moins un motif d'une partie ou de l'intégralité d'un faisceau d'éclairage de la route puisse être réalisé sur la source lumineuse ;
- chacun des groupements lumineux comprend uniquement une première, une deuxième et une troisième zones lumineuses, émettant lorsqu'elles sont alimentées électriquement des rayons lumineux de couleur respectivement rouge, bleue et verte ; il est ainsi possible de piloter chaque groupement comme un pixel dit RGB, dans lequel une première, une deuxième et une troisième zones lumineuses sont éteintes ou allumées avec plus ou moins d'intensité pour conférer au pixel RGB la couleur souhaitée ; le système peut ainsi former des images en couleur ;
- le système comprend un dispositif de pilotage de la source lumineuse, notamment dans les cas où le système comprend une paire de lunette visés ci-dessus, le dispositif de pilotage étant apte à sélectionner et à activer les zones lumineuses en fonction d'un signal reçu, de manière à former un motif lumineux associé à ce signal reçu ;
- le dispositif de pilotage comprend une mémoire comprenant une banque de donnée d'images associées à des codes, de manière à ce que lorsque le signal reçu correspond à l'un de ces codes, le dispositif de pilotage active la source lumineuse de manière à former le motif lumineux associé à ce code ;
- l'écran est un écran de véhicule ; cela permet ainsi l'affichage d'informations à destination du conducteur, ou d'un passager, qui regarde au travers de l'écran ;
- l'écran est choisi parmi : un pare-brise, une lame partiellement transparente s'étendant depuis le dessus du tableau de bord, un écran d'instruments du tableau de bord, ou une lunette arrière de véhicule ; cela permet, en particulier le conducteur, d'avoir des informations supplémentaires dans son champ de vision ;
- le système comprend un dispositif de vision comprenant ledit écran et au moins un élément de maintien supportant ledit écran, le ou les éléments de maintien étant apte(s) à assurer le maintien du dispositif de vision sur la tête d'un utilisateur, notamment par enfilement du moyen de maintien sur la tête, de manière à ce que l'écran soit agencé en vis-à-vis d'au moins un oeil de l'utilisateur ; cela permet d'utiliser cet équipement uniquement pour le conducteur ;
- le projecteur d'image est agencé sur le ou sur l'un des éléments de maintien ; on a ainsi un dispositif compact ;
- l'écran comprend une face avant et une face arrière séparées par une tranche, le projecteur d'image étant agencé de manière à envoyer les rayons lumineux formant l'image source vers cette tranche, le projecteur d'image comprenant des éléments de couplage et étant agencé de manière à ce que ces rayons se propagent à l'intérieur de l'épaisseur de l'écran jusqu'à des éléments de découplage qui renvoient les rayons lumineux hors de l'écran au travers de sa face arrière ; c'est une manière de réaliser une image en avant d'un écran porté qui sera visible du seul porteur du dispositif de vision et à l'intérieur de son champ de vision ; les éléments de couplage peuvent par exemple être formés sur le dioptre arrière et/ou le dioptre avant d'une lentille de projection ;
- l'élément de maintien comprend un dispositif de pilotage de la source lumineuse de manière à former le motif lumineux ; ainsi, l'affichage de l'information peut être commandé, par exemple en fonction d'un signal reçu ou d'une commande activée ;
- l'élément de maintien comprend un récepteur de signal, notamment un récepteur de signal Bluetooth ou un récepteur de signal Wifi, connecté audit dispositif de pilotage ; ainsi, le système d'affichage peut recevoir des signaux de commande, par exemple d'un calculateur du tableau de bord, pour afficher certaines informations, par exemple un pictogramme de limitation de vitesse ;
- le récepteur de signal et le dispositif de pilotage sont agencés de manière à ce que le dispositif de pilotage active la source lumineuse en fonction du ou des signaux reçus par ledit récepteur de signal ;
- le dispositif de vision est choisi parmi :
   ∘ un casque dont la visière forme l'écran et dont la partie protectrice forme ledit élément de maintien,
   o une paire de lunette dont au moins un verre forme l'écran et dont la monture forme ledit élément de maintien,
   o un masque de vision dont le masque transparent forme l'écran et dont la monture forme ledit élément de maintien,
   o un monocle dont le verre forme l'écran et dont la monture forme ledit élément de maintien.

Un autre objet de l'invention est un véhicule comprenant un système d'affichage selon l'invention.

Selon une réalisation de ce véhicule, l'écran est une lunette arrière, ce véhicule comprenant un rétroviseur intérieur avant visible du conducteur, le rétroviseur intérieur avant, la lunette arrière et ledit projecteur étant agencés de manière à ce que l'image virtuelle soit visible dans le rétroviseur intérieur avant.

Un autre objet de l'invention est un procédé de pilotage d'un système d'affichage selon l'invention.

Par ailleurs, dans le système d'affichage selon l'invention la source lumineuse peut optionnellement présenter une ou plusieurs des caractéristiques suivantes :
- les bâtonnets présentent un diamètre compris entre 0,1 micromètre (µm) et 2 µm, notamment entre 1,4 µm et 1,6 µm, par exemple 1 µm ; cela permet d'augmenter la surface émettrice de lumière et confère un meilleur rendement lumineux à la source lumineuse ; par diamètre des bâtonnets on entend le diamètre du cercle circonscrit à la section transversale de ces bâtonnets, le terme « transversale » étant ici pris au sens de transversale à la direction selon laquelle le bâtonnet correspondant s'étend ; par exemple, ces bâtonnets peuvent être de section polygonale, notamment une section correspondant à un polygone régulier, notamment une section hexagonale, le cercle circonscrit à cette section passant par chaque sommet du polygone correspondant ;
- les bâtonnets présentent par exemple une hauteur comprise entre 2 µm et 10 µm, par exemple 8 µm ; cela permet d'augmenter la surface émettrice de lumière et améliore le rendement lumineux de la source lumineuse ;
- les bâtonnets sont écartés les uns des autres d'une distance entre 1 µm et 35 µm, préférentiellement entre 3 µm et 30 µm, préférentiellement entre 3 µm et 10 µm ;
   le maximum de distance correspond à un minimum de densité en bâtonnets ; bien que ce maximum de distance ne soit pas limitatif, il confère de meilleurs résultats en termes de rendement lumineux, à savoir le rapport de la puissance optique émise sur la puissance électrique injectée, notamment pour un module lumineux automobile ; le minimum de 1 µm permet une réalisation plus facile de ces sources lumineuses, en particulier de la croissance des bâtonnets ; néanmoins lorsque les bâtonnets sont trop denses, l'émission de certains bâtonnets peut-être gênée par la présence d'autres bâtonnets, qui l'écrantent ;
- le rendement de la source lumineuse est significativement amélioré avec une distance d'au moins 3µm ; les bâtonnets s'étendent depuis le substrat selon une direction privilégiée ;
- les bâtonnets comprennent un nitrure de métal, notamment un nitrure de gallium, et/ou le substrat est essentiellement à base de silicium ; les nitrures de métal et en particulier de gallium permettent d'obtenir de bons résultats en termes d'émission de lumière ; Le silicium permet de réaliser une source lumineuse, et donc un projecteur d'image, moins onéreux que les LED classiques ;
- la source lumineuse comprend une couche d'un luminophore agencée au-dessus des bâtonnets de manière à ce que le luminophore reçoive les rayons émis par les bâtonnets et émette à son tour des rayons lumineux, correspondant aux rayons lumineux émis par la zone lumineuse correspondante ;
- la source lumineuse comprend un moyen de connexion destiné à être connecté à une alimentation électrique, ce moyen de connexion étant agencé pour alimenter électriquement et indépendamment les différentes zones lumineuses ; la source lumineuse peut ainsi recevoir l'alimentation électrique des différentes zones depuis un seul point de connexion ;
- le substrat comprend une cathode reliée au ou formant un pôle négatif du moyen de connexion ; il s'agit d'une connexion simple de la source lumineuse ;
- la source lumineuse comprend au moins autant d'anodes que de zones lumineuses, chaque anode étant agencée de manière à être en contact avec chacune des bâtonnets d'une seule et même zone lumineuse, notamment chaque anode étant connectée à une ou plusieurs bornes positives du moyen de connexion ou formant chacune une borne positive du moyen de connexion ; il s'agit d'un exemple de réalisation compact et simple de la connexion de chaque zone lumineuse, compacité d'autant plus améliorée lorsque les anodes sont connectées au même moyen de connexion ;
- chaque anode est formée par une couche conductrice déposée au-dessus du substrat, du côté des bâtonnets, et joignant électriquement les bâtonnets les unes aux autres ; il s'agit d'un exemple de réalisation davantage compact de la source lumineuse ;
- la composition chimique des bâtonnets de l'au moins une zone lumineuse diffère de la composition chimique des bâtonnets de l'au moins une autre zone lumineuse, de manière à ce que les bâtonnets de l'au moins une zone lumineuse émettent des rayons lumineux d'une couleur différente de celle des rayons lumineux émis par les bâtonnets de l'au moins une autre zone lumineuse ;
- chaque zone lumineuse comprend une couche d'un luminophore agencée au-dessus des bâtonnets, de manière à ce que le luminophore reçoive les rayons émis par les bâtonnets et émette à son tour des rayons lumineux, correspondant aux rayons lumineux émis par la zone lumineuse correspondante, au moins deux zones lumineuses différant les unes des autres par:
   o la composition chimique de leurs bâtonnets,
   o la composition chimique de leur couche de luminophore, et/ou
   o l'épaisseur de leur couche de luminophore ;
      ce sont des réalisations permettant d'obtenir avec différentes zones lumineuses des couleurs et/ou des intensités différentes ;
- au moins une zone lumineuse émet un flux lumineux différent au moins du flux lumineux émis par une autre zone lumineuse ;
- les zones lumineuses émettant des intensités lumineuses différentes présentent une densité différente de bâtonnets par unité de surface de substrat et/ou sont de tailles différentes les unes par rapport aux autres ;
- le projecteur d'image comprend un moyen de pilotage des différentes zones lumineuses agencé pour alimenter sélectivement les zones lumineuses en fonction d'un signal de commande reçu ; ainsi ce moyen de pilotage est compris directement dans le projecteur d'image, sans qu'il soit nécessaire d'adapter le support ou le dispositif global qui le reçoit ; ce moyen de pilotage est notamment un ensemble électronique de pilotage.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 représente schématiquement un exemple illustrant le principe général du système d'affichage selon l'invention ;
- la figure 2 représente une source lumineuse à bâtonnets utilisée dans un système d'affichage selon l'invention, notamment comme en figure 1 ; il s'agit d'une vue de face par rapport à la direction globale d'émission de lumière par cette source ;
- la figure 3 représente une partie de la source lumineuse de la figure 2 vue en coupe, selon un plan perpendiculaire à la figure 2 ;
- la figure 4 représente un schéma de connexion de la partie de la source représentée en figure 3, en vue de dessus;
- la figure 5 représente un dispositif de vision d'un système d'affichage selon un premier mode de réalisation ;
- la figure 6 représente un véhicule avec un système d'affichage embarqué, ainsi que le dispositif de vision de la figure 5, ainsi que des systèmes d'affichage selon un deuxième et une troisième mode de réalisation ;
- la figure 7 représente un dispositif de vision d'un système d'affichage selon un quatrième mode de réalisation ;
- la figure 8 représente un système d'affichage selon un cinquième de réalisation ;
- la figure 9 représente un dispositif de vision d'un système d'affichage selon un sixième mode de réalisation.

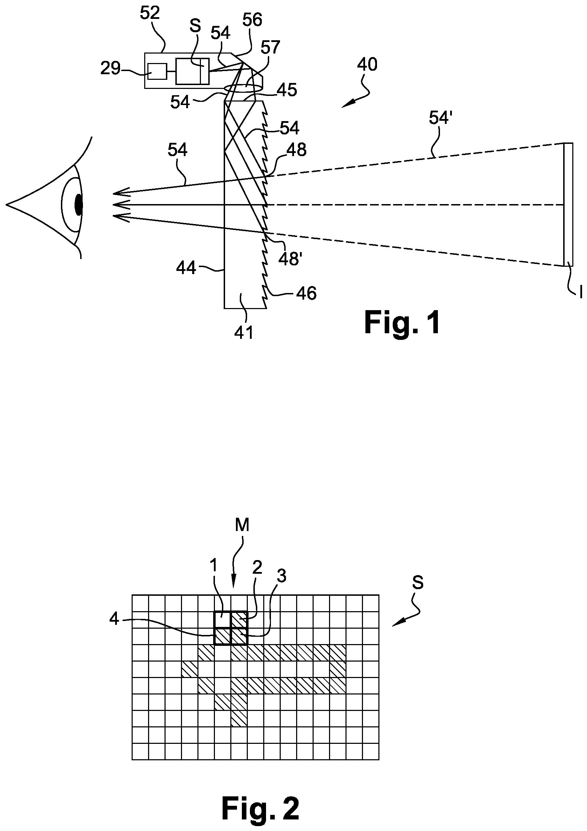

La figure 1 illustre un système d'affichage selon une réalisation de l'invention et comprenant un dispositif de génération d'une image virtuelle 40. Ce dispositif comprend un écran 41 couplé à un projecteur d'image 52. En effet, le projecteur d'image 52 est agencé de manière à envoyer des rayons lumineux 54 à l'intérieur de l'écran 41.

Cet écran 41 est au moins partiellement transparent et au moins partiellement réfléchissant.

Le projecteur d'image 52 comprend une source lumineuse S. Comme illustré en figure 2, cette source lumineuse S comprend une pluralité de zones lumineuses 1, 2, 3, 4, activables sélectivement.

Dans l'exemple illustré, ces zones lumineuses 1, 2, 3, 4, sont réparties selon une matrice de colonnes et de lignes, de manière à faciliter leur activation sélective.

Les zones lumineuses 1, 2, 3, 4, sont activables sélectivement pour former un motif M donné.

Dans l'exemple illustré, les différentes zones lumineuses représentées en noir correspondent à des zones éteintes, alors que les autres sont allumés. Cette sélection d'activation confère une configuration de zones allumées et éteintes correspondant au motif M donné, dans cet exemple une flèche noire sur un fond de la couleur de la lumière émise par les zones lumineuses activées, par exemple la couleur blanche.

Par souci de clarté, seules quatre zones lumineuses ont ici été référencées. Comme on peut l'observer la première de ces zones lumineuses 1 est allumée alors que les autres 2, 3, 4, sont éteintes.

Comment illustré en figure 1, le projecteur d'image 52 comprend un dispositif de pilotage 29 connecté à la source lumineuse S et apte à piloter celle-ci de manière à former le motif lumineux M. Dans cet exemple, le pilotage s'effectue en éteignant ou en allumant sélectivement les zones lumineuses. Il peut aussi être agencé de manière à moduler l'intensité de la lumière émise par ces zones lumineuses.

L'écran 41 comprend deux faces étendues opposées 44 et 46 séparées par un tranche 45.

La source lumineuse S est agencée en vis-à-vis d'un ensemble d'éléments optiques 56, 57, apte à projeter l'image de cette source lumineuse en direction de la tranche 45 de l'écran 41.

Cet ensemble d'éléments optiques comprend dans cet exemple au moins une lentille de projection 57 dont les dioptres avant et arrière, par rapport au sens ou les rayons 54 le traversent, sont agencés pour envoyer l'ensemble des rayons sur la tranche 45 avec un angle tel que ces rayons 54 pénètrent dans l'écran 41 et se propagent à l'intérieur de celui-ci par une ou plusieurs réflexions internes sur ses faces étendues 44 et 46. Cet écran 41 est donc agencé pour fonctionner comme un guide de lumière, son agencement avec le projecteur d'image 52 permettant un couplage des rayons lumineux 54 à l'intérieur de l'épaisseur de l'écran 41.

Par exemple, le projecteur d'image 52 est agencé de manière à envoyer les rayons lumineux 54, et donc l'image source formée par le motif M, selon une direction formant avec la normale à la tranche 45 un angle inférieur à 10°.

Une ou les deux faces étendues 44, 46, comprennent des éléments de découplage 48 ayant un agencement tel que lorsque des rayons 54 couplés à l'écran 31 rencontrent l'un de ces élément de découplage 48, ils sont réfléchis ou réfractés de manière à sortir par l'une des faces étendues, dite première face ou face de sortie 44 de l'écran 41.

Dans cet exemple, les éléments de découplage 48 sont formés sur la face étendue opposée à la face de sortie, dite deuxième face 46. Ces éléments de découplage 48 réfléchissent donc les rayons 54 qui les rencontrent vers la face de sortie 44, avec un angle d'incidence tel qu'ils sortent de l'écran 41 par la face de sortie 44.

Les éléments de découplage 48 peuvent par exemple être formés par des stries qui ont des sections en forme de prismes.

Les éléments de découplage 48 sont agencés de telle manière que les rayons 54 sortent de l'écran 41 en direction de l'endroit où est destiné à être positionné l'oeil de l'utilisateur du système d'affichage.

Comme dans un miroir classique, ces rayons 54 correspondent à une image virtuelle I située de l'autre côté de l'écran 41, par rapport à l'utilisateur.

Par conséquent dans la demande, le côté de l'écran 41 tourné vers l'utilisateur est appelé arrière de l'écran 41, et l'autre côté que l'image virtuelle I est appelé avant de l'écran 41.

Ainsi, l'observateur situé en arrière de l'écran 41 verra une image virtuelle I en avant de cet écran 41.

Cette image virtuelle I est agrandie comparé à l'image du motif lumineux M. On peut donc réaliser une image virtuelle I à distance de l'écran 41 et de taille beaucoup plus grande que la source lumineuse S.

A noter que selon des réalisations de l'invention, et comme illustré ici, l'écran 41 et le projecteur d'image 52 sont agencés de sorte que la sortie des rayons 54 du projecteur d'image, ici le dioptre de sortie de la lentille 57, soit en vis-à-vis de la tranche 45. L'écran peut être dans ce cas également agencé de manière à ce que le projecteur d'image 52 envoie l'image source selon une direction formant avec la normale à l'écran un angle supérieur à 45°. Ici, la normale à l'écran est la normale à un plan moyen dont la face arrière 44 de l'écran est le plus proche au niveau forme. On gagne donc en compacité comparé à des projecteurs projetant sur des écrans classique, le projecteur d'image 52 pouvant, dans cette réalisation, être très proche de l'écran 41. Dans l'exemple illustré, il est même à son niveau.

Dans cet exemple, l'ensemble d'éléments optiques comprend également un réflecteur plan 56, agencé de manière à réfléchir les rayons lumineux émis par la source lumineuse S sur le dioptre d'entrée de la lentille 57. Cela permet d'orienter la source S pour qu'elle émette dans une direction différente de la direction d'émission des rayons lumineux par le projecteur d'image 52.

Ici, la source lumineuse S est agencée pour émettre dans une direction correspondant globalement à une direction d'arrière en avant de l'écran 41, par exemple une direction longitudinale dans le cadre d'une utilisation dans un véhicule. Le réflecteur 56 est orienté à 45° par rapport à cette direction, de manière à renvoyer les rayons perpendiculairement et vers la lentille 57, agencée elle aussi longitudinalement. Cela permet un agencement longitudinal du projecteur d'image 52 et un agencement vertical de l'écran 41, comme par exemple dans le cas d'un projecteur d'image agencé dans une branche de lunette et couplé à un verre de lunette, comme il sera décrit plus loin.

Selon une réalisation non représentée, les différents éléments optiques du projecteur 52 peuvent être choisis de manière à déformer plus ou moins l'image du motif lumineux M. Par exemple, le motif M peut être formé de manière à être une anamorphose par rapport à l'image virtuelle I. Les éléments optiques sont dans ce cas agencés pour changer les proportions largeur/longueurs de l'image virtuelle. Par exemple, le motif M peut être de forme trapézoïdale mais les éléments optiques sont agencés pour projeter une image carrée de celui-ci. Cela permet notamment plus de liberté d'orientation de la source par rapport à l'écran.

Dans d'autres réalisations, comme celles illustrées, le motif M est peu, voire pas déformé, seule sa taille est agrandie après projection en une image virtuelle I.

L'invention tire partie d'une source lumineuse S à bâtonnets submillimétriques répartis en différentes zones qui forment les zones activables sélectivement 1, 2, 3, 4. L'avantage d'une telle source lumineuse s est que les zones activables sélectivement peuvent être de tailles relativement faibles, permettant ainsi au projecteur d'image d'être également de faible taille et d'être intégré facilement à d'autre dispositif, par exemple dans un dispositif embarqué dans un véhicule.

L'image virtuelle I étant une projection en avant de l'écran 41, elle peut par exemple être superposée à certains des objets perçus par l'observateur au travers de l'écran 41. Il suffit donc que l'image virtuelle I ait la taille de l'objet, tel qu'il apparait dans le champ de vision de l'observateur. Dans un tel exemple, cela permet de réaliser une mise en évidence de ces objets, dite réalité augmentée.

À noter cependant qu'il peut y avoir des modes de réalisation où l'image virtuelle I est affichée sans superposition à d'autres objets.

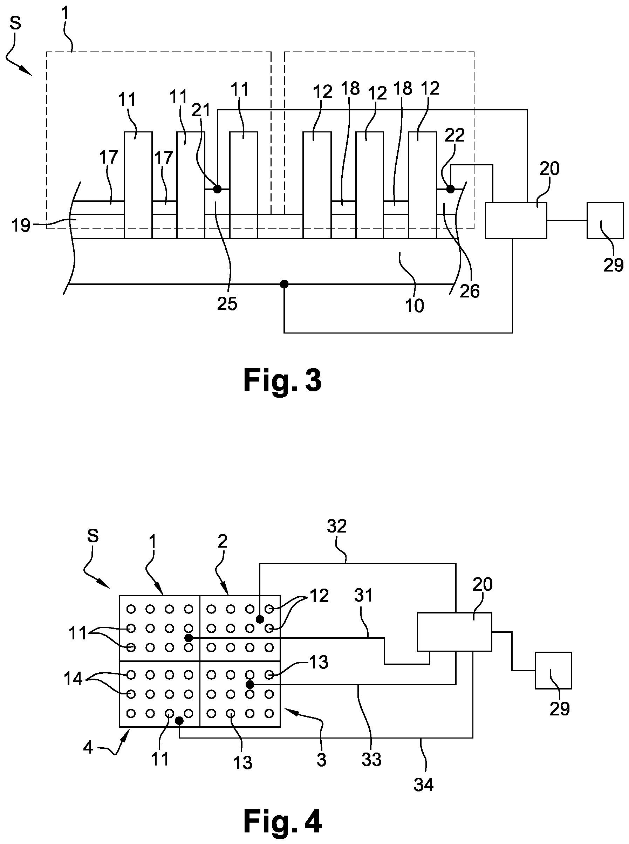

Ces zones lumineuses sont détaillées dans les figures 3 et 4, qui représentent schématiquement une portion de la source lumineuse S à bâtonnets. Comme illustré en figure 2, la source lumineuse S, comprend un substrat 10 à partir duquel s'étendent selon une direction privilégiée des bâtonnets 11, 12, 13, 14.

Ce substrat 10 est, notamment dans cet exemple, du silicium, ce qui représente un coût bien moindre à celui des LED classiques, dans lesquelles les substrats sont en saphir. Les bâtonnets 11, 12, 13, 14, peuvent être obtenus par croissance cristalline sur ce substrat 10.

Les bâtonnets 11, 12, 13, 14, sont agencés de manière à former des bâtonnets en un matériau semi-conducteur électroluminescent. Les bâtonnets 11, 12, 13, 14, peuvent par exemple être formés essentiellement de nitrure de gallium.

Par exemple, ces bâtonnets 11, 12, 13, 14, comprennent une âme en matériau semi-conducteur apte à être dopé en électrons, autour de laquelle est formée une première couche en matériau semi-conducteur apte à présenter des déficits en électrons, dans ce cas on parle parfois de couche dopée en « trous » ou en charges positives. A l'interface de cette âme et de cette première couche, se forme une couche intermédiaire où se recombinent les électrons et les déficits en électrons. Ainsi, chaque bâtonnet 11, 12, 13, 14, est un élément semi-conducteur électroluminescent.

Une couche de nucléation 19 est formée sur le substrat 10 et autour des bâtonnets 11, 12, 13, 14.

Les bâtonnets 11, 12, 13, 14, sont ici distants d'environ 3 µm et ont chacun une hauteur, prise depuis la couche de nucléation 19 jusqu'à leur sommet, de 8 µm. Leur épaisseur, qui correspond ici à la largeur des bâtonnets en figure 1, est de 1 µm.

La source lumineuse S comprend donc essentiellement un substrat 10 formant une plaque hérissée d'une multitude de petits bâtonnets 11, 12, 13, 14, électroluminescents et submillimétriques, à savoir dont la plus grande dimension est inférieure au millimètre.

Comme indiqué précédemment, la source lumineuse S est divisée en plusieurs zones lumineuses 1, 2, 3, 4, correspondant à une répartition de l'ensemble des bâtonnets 11, 12, 13, 14.

Entre chaque bâtonnets 11, 12, 13, 14 d'une même zone 1, 2, 3, 4, est déposée une couche électriquement conductrice, joignant électriquement ces bâtonnets, formant ainsi une anode distincte 25, 26, pour chacune des zones lumineuses 1, 2, 3, 4.

Les quatre anodes 25, 26, ainsi formées sont en contact avec la couche de nucléation 19, qui elle-même est en contact avec la cathode formée par le substrat 10.

Ainsi, en connectant les anodes 25, 26 et la cathode 10 à une source d'alimentation, on peut alimenter en électricité indépendamment chacune des différentes zones lumineuses 1, 2, 3, 4.

Selon une réalisation de l'invention, chaque anode est connectée à une ou plusieurs bornes positives d'un moyen de connexion 20, destiné à être connectée à la borne positive d'une source d'alimentation électrique (non représentée) d'un véhicule. De même, la cathode 10 est connectée à la borne négative du moyen de connexion 20. Le moyen de connexion permet donc l'alimentation électrique de chacune de ces zones lumineuses 1, 2, 3, 4.

Il est donc possible de piloter cette source lumineuse S, par activation sélective de ses zones lumineuses 1, 2, 3, 4, via le moyen de connexion 20.

Le pilotage peut être réalisé par un moyen spécifique distinct du projecteur d'image, ou bien, comme dans cet exemple réalisé par un dispositif de pilotage 29 intégré au projecteur d'image 52.

Dans cet exemple, le pilotage est réalisé directement par un dispositif de pilotage 29. Ce dernier est relié d'une part au moyen de connexion 20 et d'autre part à un connecteur, non représenté, du projecteur d'image 52. Le moyen de connexion 20 est lui relié à chaque anode 25, 26, via des conducteurs électriques 31, 32, 33, 34, notamment en un point de contact 21, 22.

Le dispositif de pilotage 29 et la source lumineuse S sont montés sur une même carte de circuit imprimé, non représentée. Les conducteurs électriques 31, 32, 33, 34 sont formés par des pistes électroniques de cette carte de circuit imprimé. De même, d'autres pistes électroniques relient le moyen de connexion 20 au dispositif de pilotage 29.

Le rendement lumineux des zones lumineuses 1, 2, 3, 4, peut être amélioré en déposant une couche réfléchissante 17, 18, sur la couche de nucléation 19. Cette couche réfléchissante 17, 18, est par exemple déposée sur la couche de nucléation 19 avant croissance des bâtonnets, puis des trous sont ménagés dans cette couche réfléchissante 17, 18, ainsi que dans la couche de nucléation, avant croissance des bâtonnets 11, 12, 13, 14, sur le substrat 10.

Pour avoir un meilleur rendement lumineux, les bâtonnets des zones lumineuses peuvent avoir les caractéristiques ci-dessous :
- une épaisseur comprise entre 1,4 µm et 1,6 µm, par exemple 1 µm,
- une hauteur comprise entre 2 µm et 10 µm, par exemple 8 µm,
- une distance entre chaque bâtonnet comprise entre 3 µm et 30 µm, par exemple 3 µm.

En figure 4, seules quatre zones lumineuses, 1, 2, 3, 4 ont été représentées parmi celles de la source lumineuse.

Dans l'exemple illustré en figures 2 à 4, chaque zone lumineuse correspond à un pixel de l'image source, soit du motif M.

Cependant selon certaines réalisation de l'invention, les zones lumineuses peuvent être réparties en groupements lumineux, chacun de ces groupements comprenant au moins deux zones lumineuses, et pour chacun des groupements lumineux, chaque zone lumineuse étant apte à émettre des rayons lumineux d'une couleur différente de celle des rayons lumineux que les autres zones lumineuses de ce groupement lumineux sont aptes à émettre.

Par exemple, chaque groupement lumineux est agencé en un système RGB, chaque groupement comprenant une première, une deuxième et une troisième zones lumineuses, émettant, lorsqu'elles sont alimentées électriquement, des rayons lumineux de couleur respectivement rouge, bleue et verte. Cela permet ainsi de générer un motif M avec des couleurs différentes.

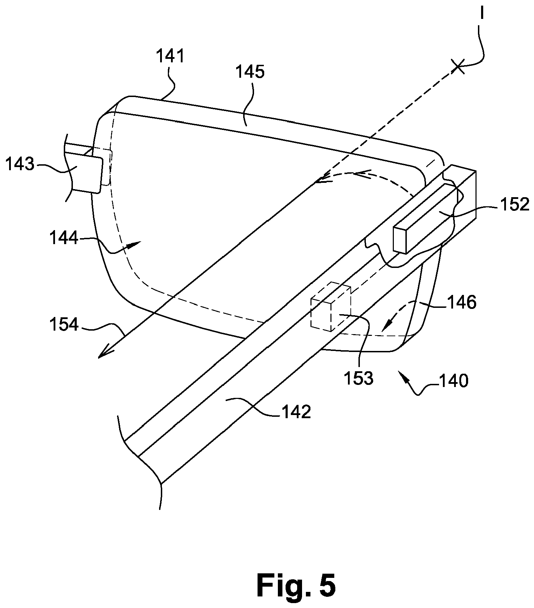

La figure 5 illustre un exemple de système d'affichage selon un premier mode de réalisation. Dans cet exemple, le dispositif de génération d'image 40 du système d'affichage est un dispositif de vision 140.

Ce dispositif de vision 140 est une paire de lunettes. Cette paire de lunettes 140 comprend trois éléments de maintien, à savoir deux branches de lunettes 142, seule la branche droite étant représentée, ainsi qu'un élément de jonction 143 des deux verres 141, seul le verre 141 droit étant représenté.

Au moins pour l'un des verres 141 forment un écran 41 tel que mentionné précédemment.

Un projecteur d'image 152 est logé dans l'une des branches 142 de la paire de lunettes, ici la branche droite. Le projecteur d'image 152 est d'une taille relativement faible au regard de la paire de lunettes 140 pour permettre son logement dans la branche 142.

La source lumineuse S et les différents éléments optiques permettant d'envoyer les rayons de lumière à l'intérieur du verre 141 peuvent être réalisés tel qu'il a été illustré en figure 1, le projecteur d'image 152 étant cependant agencé sur le côté du verre 141 et non au-dessus.

Le projecteur d'image 152 est agencé pour envoyer les rayons lumineux 154 émis par la source lumineuse S à bâtonnets au travers d'une tranche 145 du verre 141. Pour cela le projecteur d'image 152 est en vis-à-vis de la tranche 145, en particulier il peut comprendre une lentille de projection en vis-à-vis de cette tranche.

Comme décrit précédemment, les rayons lumineux 154 se propagent ensuite par une réflexion interne ou plusieurs réflexions internes successives dans l'épaisseur du verre 141, jusqu'à rencontrer des éléments de découplage, non représentés en figure 5, agencés pour découpler les rayons lumineux du verre 141 et les faire sortir par le dioptre formé par la face arrière 144 du verre 141, en direction de l'oeil du porteur de lunettes. Ainsi, ce dernier reçoit ces rayons 154. Il voit ainsi une image virtuelle I en avant du verre 141 et en vis-à-vis de la face avant 146 de ce dernier.

La branche droite 142 un récepteur 153 de signal dont des exemples de fonctionnement sont expliqués ci-après. Notamment, la paire de lunettes 140 peut être couplée à différents dispositifs du véhicule dans lequel est le porteur de lunettes 140. Par exemple, des dispositifs envoyant des informations et/ou des signaux de commande relatifs aux motifs lumineux M à former avec la source lumineuse à bâtonnets S.

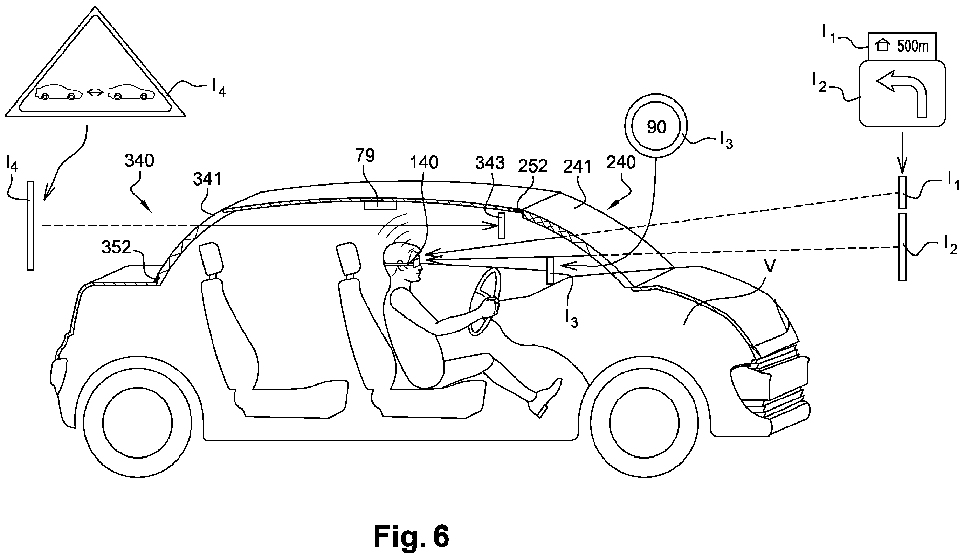

Sur la figure 6 sont illustrés trois modes de réalisation de systèmes d'affichage selon l'invention.

En plus du système d'affichage comprenant la paire de lunettes 140, ce véhicule V comprend deux autres systèmes d'affichage.

Selon un deuxième mode de réalisation, le système d'affichage 240 intègre comme écran 41, le pare-brise de 241 du véhicule. Entre le toit de ce véhicule V et le plafond de celui-ci, est logé le projecteur d'image 252. Ce dernier est agencé de manière à envoyer une image d'une source lumineuse à bâtonnets par réflexion en direction de la tranche de ce pare-brise 241, de manière à ce que les rayons s'y propagent par réflexion interne comme dans le principe de base illustré en figure 1.

Ce pare-brise 241 comprend également des éléments de découplage qui renvoient les rayons lumineux en direction de l'observateur, à savoir du conducteur dans cet exemple.

Par exemple comme illustré, une image virtuelle I1 est formée en avant du véhicule, correspondant par exemple à une indication de l'arrivée à destination dans 500 mètres (m).

Ici les éléments de découplage sont agencés de manière à ce que seul le conducteur puisse voir cette image I1, seul lui recevant ces rayons lumineux. On peut envisager cependant plusieurs projecteurs d'image couplés au pare-brise 241 pour que certaines images soient visibles d'autres passagers du véhicule V.

Selon un troisième mode de réalisation, le système d'affichage 340 intègre la lunette arrière 341 comme écran 41 de ce système d'affichage 340. Un projecteur d'image 352 est agencé au bas de la lunette arrière 341, par exemple au-dessus de la malle du véhicule V, de manière à projeter une image d'une source à bâtonnets dans la tranche de la lunette arrière 341, de manière à ce que la lumière s'y propage puis en sorte comme dans le principe de base illustré en figure 1.

Ce système d'affichage 340 est ici particulier en ce qu'avant de rencontrer l'oeil de l'observateur, les rayons lumineux sont envoyés, grâce à l'agencement des éléments de découplage de la lunette arrière 341, en direction d'un rétroviseur 343, dans cet exemple fixé au plafond du véhicule. Ainsi, une image virtuelle I4 se forme en avant de la lunette arrière 341, par rapport au positionnement de l'observateur, soit à l'arrière du véhicule V. L'observateur voit donc dans le rétroviseur 343 l'image virtuelle I4 comme formée à l'arrière du véhicule.

Par exemple, cela peut être une image I4 indiquant que les distances de sécurité ne sont pas respectées par le véhicule suivant le véhicule V, attirant ainsi la vigilance du conducteur notamment quant aux décisions à prendre en cas de freinage.

Dans cet exemple, comme indiqué précédemment, le plafonnier 79 comprend au moins un émetteur apte à envoyer un signal de commande au récepteur 153 de la paire de lunettes 140.

Le plafonnier peut être couplé à un dispositif de détection de panneaux de vitesse qui communique avec un calculateur, ici du plafonnier. Le calculateur commande l'émetteur du plafonnier qui envoie un signal de commande, par exemple signal Wi-Fi, qui est reçu par le récepteur 153 de la paire de lunettes 140. Ce dernier récepteur 153 est connecté au dispositif de pilotage du projecteur d'image 152, qui lorsqu'il reçoit ce signal associe, par exemple au moyen d'un processeur, la configuration d'activation des zones lumineuses de la source à bâtonnets requise de manière à former sur cette source lumineuse, le motif correspondant à la limitation de vitesse correspondante. Le projecteur d'image 152 envoie ainsi l'ensemble des rayons formant ce motif à l'intérieur du verre 141, qui envoie les rayons vers le conducteur, qui observe donc devant lui une image virtuelle I3 correspondant à la limitation de vitesse concernée.

De la même manière, le calculateur peut être couplé à un détecteur de distance du véhicule V à un véhicule suivant, déterminer si cette distance est inférieure à un seuil donné, puis envoyer alors le signal de commande entraînant le pilotage des zones lumineuses de manière à former l'image virtuelle I4 en arrière du véhicule V.

Les projecteurs d'image, notamment celui 252 du système d'affichage 240 comprenant le pare-brise de 241, peuvent comprendre une source lumineuse suffisamment grande pour afficher différentes informations, par exemple la première image virtuelle I1 indiquant une arrivée dans 500 m et une deuxième image virtuelle I2 indiquant une information d'itinéraire indiquant de tourner à gauche.

Le calculateur peut être en communication avec un système de navigation du véhicule V, pour envoyer le signal de commande correspondant à ces première et deuxième images virtuelles I1 et I2.

Les dispositifs envoyant le signal de commande au dispositif de pilotage de la source lumineuse à bâtonnets ne sont pas nécessairement dans le plafonnier 79, mais peuvent être par exemple au niveau du tableau de bord ou tout autre emplacement du véhicule, du moment qu'ils peuvent communiquer avec ce dispositif de pilotage.

Pareillement, le calculateur peut être intégré au véhicule ou au dispositif de vision.

Le dispositif de pilotage 29 peut comprendre une mémoire comprenant une banque de donnée d'images associées à des codes, de manière à ce que lorsque le signal de commande émis par d'autres dispositifs, tel que le détecteur de limitation de vitesse, est reçu et correspond à l'un de ces codes, le dispositif de pilotage 29 active la source lumineuse S de manière à former le motif lumineux M associé à ce code.

D'autres modes de réalisation de systèmes d'affichage sont possibles, en particulier d'autres dispositifs de vision qu'une paire de lunettes 140 peuvent être envisagée.

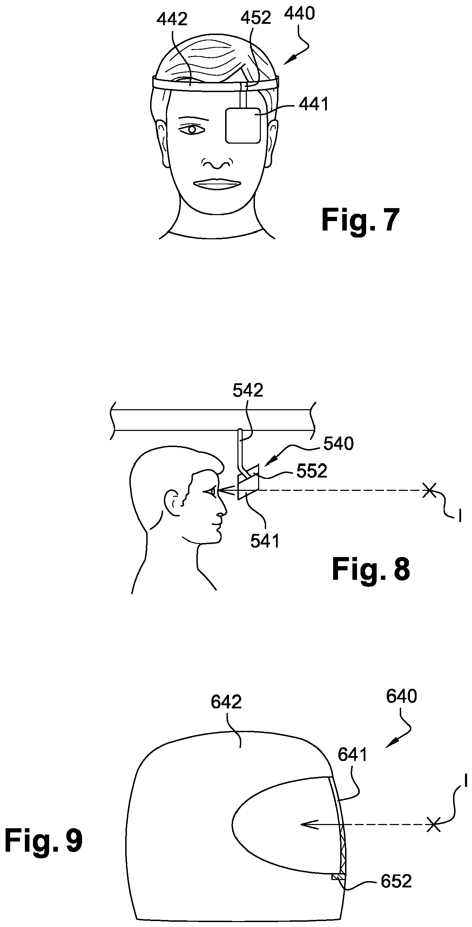

Par exemple en figure 7, un système d'affichage selon un quatrième mode de réalisation comprend un dispositif de vision 440, qui forme un monocle le verre 441 porté par un bandeau tête 442, destiné à être porté sur la tête de l'utilisateur.

Le dispositif de projection d'image 452 est logé dans ce bandeau 442 et projette les images jusqu'à l'intérieur de ce monocle 441, comme dans le principe de base illustré en figure 1.

La figure 8 représente une variante de la figure 8. Ici le système d'affichage 540 selon un cinquième mode de réalisation ne comporte pas de dispositif de vision apte à être porté par l'utilisateur car le verre 541 destiné à être en vis-à-vis de l'oeil de l'observateur, est porté par le plafond du véhicule.

Un bras articulé 542 fixé au plafond du véhicule maintient ce verre 541. Un projecteur d'image 552 est relié à la partie supérieure du verre 541, et couplé avec ce dernier comme dans le principe de base illustré en figure 1. On a ainsi un dispositif articulé pouvant être rabattu au niveau du toit de l'habitacle, ou être abaissé en face de l'oeil du conducteur.

Comme illustré en figure 9, selon un sixième mode de réalisation de l'invention, le dispositif de vision peut également être un casque de protection 640, pour un conducteur automobile ou de motocycles. Dans ce cas, c'est la visière 641 du casque 640 qui forme l'écran 41 du système d'affichage.

Le casque 342 peut comprendre, au niveau de la partie protégeant la mâchoire inférieure, un projecteur d'image 652 agencé pour envoyer les rayons lumineux provenant de la source lumineuse à l'intérieur de la visière 641, pour former l'image virtuelle I en avant de la visière 641, comme dans le principe de base illustré en figure 1.

## Revendications

1. Système d'affichage (40) comprenant :
- un écran (41) au moins partiellement transparent et au moins partiellement réfléchissant,
- un projecteur d'image (52) comprenant une source lumineuse (S) comprenant des bâtonnets électroluminescents (11 à 14) de dimensions submillimétriques, l'ensemble des bâtonnets étant configurés de manière à émettre un motif lumineux (M),
dans lequel le projecteur et l'écran coopèrent de manière à former une image virtuelle (I) du motif lumineux (M) par l'écran.

2. Système d'affichage (40) selon la revendication 1, dans lequel l'écran (41) a un coefficient de transmission lumineuse d'au moins 20%.

3. Système d'affichage (40) selon la revendication 1 ou 2, dans lequel l'écran comprend deux faces étendues (44, 46) séparées par une tranche (45), le projecteur d'image (52) étant agencé de manière à envoyer les rayons lumineux formant l'image source vers cette tranche, l'écran comprenant des éléments de découplage (48) et étant agencé de manière à ce que ces rayons lumineux (54) se propagent à l'intérieur de l'épaisseur de l'écran jusqu'à des éléments de découplage qui renvoient les rayons lumineux hors de l'écran au travers de l'une de ses faces étendues.

4. Système d'affichage (40) selon l'une quelconque des revendications précédentes, dans lequel les bâtonnets (11, 12, 13, 14) sont répartis dans différentes zones lumineuses (1, 2, 3, 4) agencées de manière à former le motif lumineux (M).

5. Système d'affichage (40) selon la revendication 4, dans lequel les zones lumineuses (1, 2, 3, 4) sont activables sélectivement.

6. Système d'affichage (40) selon la revendication 5, dans lequel les zones lumineuses sont réparties en groupements lumineux, chacun de ces groupements comprenant au moins deux zones lumineuses, et pour chacun des groupements lumineux, chaque zone lumineuse étant apte à émettre des rayons lumineux d'une couleur différente de celle des rayons lumineux que les autres zones lumineuses de ce groupement lumineux sont aptes à émettre.

7. Système d'affichage (40) selon l'une quelconque des revendications précédentes, dans lequel l'écran est un écran de véhicule.

8. Système d'affichage (40) selon l'une quelconque des revendications 1 à 6, dans lequel ledit système comprend un dispositif de vision (40 ; 140; 440; 640) comprenant ledit écran (41 ; 141; 441; 641) et au moins un élément de maintien (142, 143; 442; 642) supportant ledit écran, le ou les éléments de maintien étant apte(s) à assurer le maintien du dispositif de vision sur la tête d'un utilisateur, de manière à ce que l'écran soit agencé en vis-à-vis d'au moins un oeil de l'utilisateur.

9. Système d'affichage (40) selon la revendication 8, dans lequel le projecteur d'image (52 ; 152; 452; 652) est agencé sur le ou sur l'un des éléments de maintien (142, 143; 442; 642).

10. Système d'affichage (40) selon la revendication 8 ou 9, dans lequel l'écran (41 ; 141; 441; 641) comprend une face avant (46 ; 146) et une face arrière (44 ; 144) séparées par une tranche (45 ; 145), et dans lequel le projecteur d'image (52; 152; 452; 652) est agencé de manière à envoyer les rayons lumineux (54) formant l'image source vers cette tranche, le projecteur d'image comprenant des éléments de couplage (57) et étant agencé de manière à ce que ces rayons se propagent à l'intérieur de l'épaisseur de l'écran jusqu'à des éléments de découplage (48) qui renvoient les rayons lumineux hors de l'écran au travers de sa face arrière.

11. Système d'affichage (40) selon l'une quelconque des revendications 8 à 10, dans lequel l'élément de maintien (142, 143; 442; 642) comprend un dispositif de pilotage (29) de la source lumineuse (S) de manière à former le motif lumineux (M).

12. Système d'affichage (40) selon la revendication 11, dans lequel l'élément de maintien (142, 143; 442; 642) comprend un récepteur de signal (153).

13. Système d'affichage (40) selon l'une des revendications 8 à 12, dans lequel ledit dispositif de vision est choisi parmi :
- un casque (640) dont la visière (641) forme ledit écran et dont la partie protectrice (642) forme ledit élément de maintien,
- une paire de lunette (140) dont au moins un verre (141) forme ledit écran et dont la monture (142, 143) forme ledit élément de maintien,
- un masque de vision dont le masque transparent forme l'écran et dont la monture forme ledit élément de maintien,
- un monocle (440) dont le verre (441) forme ledit écran et dont la monture (442) forme ledit élément de maintien.
